# EUROPÄISCHE PATENTANMELDUNG

(11) **EP 1 302 145 A2**
(43) Veröffentlichungstag der Anmeldung: **16.04.2003**
(21) Anmeldenummer: 02022867.2
(22) Anmeldetag: 14.10.2002
(51) Int. Cl.: A47K 5/12

(54) **Halter für Duschgelflaschen**

(30) Priorität: 12.10.2001 DE 20117021 U; 12.02.2002 DE 20202460 U
(71) Anmelder: Bauer, Gerhard, 72297 Seewald-Allmandle (DE)
(72) Erfinder: Bauer, Gerhard, 72297 Seewald-Allmandle (DE)
(74) Vertreter: Twelmeier, Ulrich, Dipl. Phys.

(57) **Zusammenfassung**

Beschrieben wird ein Halter für Flaschen mit Duschgel, Haarshampoo oder einem ähnlichen fließfähigen Inhalt zur Körperpflege, mit einem Grundkörper (2) zum Befestigen an einer Wand, an welchem drehbar ein Drehstück (3) mit Mitteln zum Einklemmen (4, 5, 6, 20) einer Flasche vorgesehen ist, wobei das Drehstück (3) in verschiedenen Drehwinkelstellungen zum Grundkörper (2) festlegbar ist.

## Beschreibung

Die Erfindung betrifft einen Halter für Flaschen mit Duschgel, Haarshampoo oder einem ähnlichen fließfähigen Inhalt zur Körperpflege. Derartige Halter werden beispielsweise in Duschkabinen von Hotelzimmern, Hallenbädern oder Fitness-Studios eingesetzt. Bekannte Halter sind üblicherweise an einer Wand befestigt und halten eine mehr oder weniger große Flasche mit Duschgel oder Haarshampoo in einer Art und Weise, daß die Auslauföffnung der Flasche nach unten zeigt und durch Druck auf die Flasche deren Inhalt portionsweise entnommen werden kann.

Nachteilig an den bekannten Haltern für Flaschen mit Duschgel, Haarshampoo oder einem ähnlichen fließfähigen Inhalt zur Körperpflege ist, daß sie jeweils nur für eine ganz bestimmte Flaschenform und Flaschengröße verwendbar sind. Für Hotels, Hallenbäder und Fitness-Studios sowie ähnliche Großabnehmer, welche ihren Gästen ohnehin nur ein einziges Duschgel zur Verfügung stellen und passende Flaschen in entsprechend großer Zahl geliefert bekommen, ist dies kein gravierender Nachteil. Anders ist dies jedoch für Privathaushalte, welche nicht auf eine bestimmte Flaschenform und Größe eines bestimmten Anbieters festgelegt sein wollen. Flaschen mit Duschgel oder Haarshampoo gibt es in einer Vielzahl unterschiedlicher Formen und Größen, so daß die bekannten Halter für Privathaushalte wenig geeignet sind.

Aufgabe der Erfindung ist es daher, einen Halter für Flaschen mit Duschgel, Haarshampoo oder einem ähnlichen fließfähigen Inhalt zur Körperpflege zur Verfügung zu stellen, welcher zumindest für die meisten der gängigen Duschgel- und Haarshampooflaschen geeignet ist.

Diese Aufgabe wird von einem Halter mit den im Anspruch 1 angegebenen Merkmalen gelöst. Vorteilhafte Weiterbildungen der Erfindung sind Gegenstand der Unteransprüche.

Ein erfindungsgemäßer Halter für Flaschen mit Duschgel, Haarshampoo oder einem ähnlichen fließfähigen Inhalt zur Körperpflege verfügt über einen Grundkörper zum Befestigen an einer Wand, an welchem drehbar ein Drehstück mit Mitteln zum Einklemmen einer Flasche vorgesehen ist, wobei das Drehstück in verschiedenen Drehwinkelstellungen zum Grundkörper festlegbar ist. Als Mittel zum Einklemmen kann beispielsweise ein Gummiband dienen, mit welchem eine Flasche gegen das Drehstück gepreßt werden kann. Möglich ist es auch, zu diesem Zweck einen mit einer Feder gespannten Riemen vorzusehen. Bevorzugt verfügt das Drehstück über eine konkave Wölbung, welche insbesondere an einer ersten Backe vorgesehen ist und eine erste Klemmfläche bildet. Die zweite Klemmfläche kann beispielsweise von dem erwähnten Gummiband oder Riemen gebildet werden oder, was bevorzugt ist, von einer zweiten Backe gebildet werden, welche an einem Klemmteil ausgebildet ist und dessen Abstand von der ersten Backe veränderlich ist.

Ein erfindungsgemäßer Halter ermöglicht zwischen seinen beiden Klemmflächen das Einklemmen von Flaschen mit Duschgel oder Haarshampoo verschiedenster Form und Größe. Vorteilhaft läßt sich der Halter so für die überwiegende Mehrzahl der handelsüblichen Flaschen mit Duschgel oder Haarshampoo verwenden. Aufgrund der Drehbarkeit des Drehstückes gegenüber dem an der Wand zu befestigenden Grundkörper lassen sich Flaschen nicht nur wie bei im Stand der Technik bekannten Haltern so halten, daß ihre Auslaßöffnung nach unten zeigt, sondern auch so, daß die Auslaßöffnung schräg zur Seite oder gar nach oben zeigt, wodurch sich ein unerwünschtes Auslaufen von Inhalt zuverlässig verhindern läßt. Die verschiedenen handelsüblichen Duschgels, Haarshampoos oder ähnlichen fließfähigen Produkte zur Körperpflege weisen nämlich eine sehr unterschiedliche Viskosität und damit höchst unterschiedliches Fließverhalten auf. Während beispielsweise verhältnismäßig dünnflüssiges Duschgel bei einer senkrecht gehaltenen Flasche bereits ohne Ausüben von Druck auf die Flasche in einem fort auslaufen kann, gibt es zähflüssige Haarshampoos, welche selbst bei einer senkrecht gehaltenen Flasche nur durch Druck auf die Flasche entnehmbar sind. Je zähflüssiger also der Inhalt einer Flasche ist, desto steiler wird sie daher zweckmäßigerweise vom Halter gehalten. Durch einen erfindungsgemäßen Halter läßt sich der Neigungswinkel der Flaschen gegenüber der Vertikalen in einfacher Weise so einstellen, daß bei Bedarf die gewünschte Menge Duschgel oder Shampoo entnommen werden kann und im übrigen ein unerwünschtes Auslaufen von Inhalt zuverlässig verhindert ist. Insbesondere ermöglicht ein erfindungsgemäßer Halter auch eine praktisch vollständige Nutzung des Inhalts einer Flasche, indem die Flasche mit abnehmendem Füllstand mit einem zunehmend steileren Neigungswinkel gehalten wird. Auf diese Art und Weise wird erreicht, daß sich noch verbleibender Inhalt der Flasche stets in der Nähe der Auslauföffnung ansammelt und so bei Bedarf rasch entnommen werden kann. Das Problem, daß der zähflüssige Inhalt an den Innenwänden der Flasche kleben bleibt und sich nur sehr langsam auf die Auslaßöffnung zubewegt, so daß solche Flaschen üblicherweise mit erheblichen Inhaltsresten weggeworfen werden, wird also durch einen erfindungsgemäßen Halter gelöst. Ein erfindungsgemäßer Halter ermöglicht vorteilhaft eine praktisch vollständige Entnahme des Inhalts einer Duschgel- oder Haarshampooflasche, was vorteilhaft den Geldbeutel und die Umwelt schont.

Vorteilhaft ist ein erfindungsgemäßer Halter auch einfach zu bedienen. Zur Entnahme von Duschgel oder Haarshampoo aus einer Flasche genügt eine einzige Hand. Das geht nicht nur bequem, sondern auch schnell, so daß beim Duschen auch Wasser und zum Erwärmen desselben benötigte Energie gespart werden kann.

Für eine gute Verdrehbarkeit des Drehstückes gegenüber dem Grundkörper kann zwischen dem Drehstück und dem Grundkörper ein Kugellager vorgesehen sein. Dabei kann das Drehstück in beliebigen Drehwinkelstellungen festgelegt werden, indem man das Drehstück und den Grundkörper miteinander verspannt, so daß die Kugeln des Kugellagers eingespannt werden. Hierzu ist es vorteilhaft, eine oder mehrere Federn vorzusehen, welche zwischen einer oder mehreren Spannschrauben oder anderen Spannmitteln und dem Drehstück angeordnet sind, beim Verspannen zusammengedrückt werden und so das Drehstück mit Federkraft gegen den Grundkörper drücken. Die Festlegung des Drehstückes erfolgt auf diese Weise kraftschlüssig, nämlich durch Erhöhung der Reibungskräfte im Kugellager.

Eine vorteilhafte Weiterbildung der Erfindung sieht vor, daß das Drehstück reversibel formschlüssig in verschiedenen Drehwinkelstellungen mit dem Grundkörper verrastbar ist. Grundsätzlich läßt sich das Drehstück zwar auch kraftschlüssig, insbesondere reibschlüssig, in verschiedenen Drehwinkelstellungen zum Körper festlegen, jedoch bietet ein Formschluß den Vorteil einer größeren Belastbarkeit, wodurch ein unerwünschtes Verstellen einer Drehwinkelstellung des Drehstückes erschwert ist. Bevorzugt erfolgt der Formschluß zwischen Drehstück und Grundkörper durch Eingriff eines Vorsprunges in dafür vorgesehene Raststellen.

Eine weitere vorteilhafte Weiterbildung der Erfindung sieht vor, daß an einer dem Grundkörper zugewandten Oberfläche des Drehstückes Raststellen vorgesehen sind, welche mit einem am Körper vorgesehenen Vorsprung verrastbar sind. Raststellen lassen sich beispielsweise in Form von Ausnehmungen oder Vertiefungen mit geringem Aufwand am Drehstück vorsehen, was dazu beiträgt den Halter kostengünstig zu fertigen. Ein zum Festlegen des Drehstückes in eine Raststelle eingreifender Vorsprung am Körper läßt sich beispielsweise als integral ausgeführte noppenartige Erhebung oder auch in Form eines in einer entsprechenden Ausnehmung des Körpers gelagerten Stiftes vorsehen. Selbstverständlich lassen sich die vorstehend beschriebenen Raststellen aber auch am Drehstück und der zugehörige Vorsprung am Grundkörper vorsehen. Bevorzugt ist der Vorsprung abgerundet ausgeführt, so daß sich der Formschluß leicht von Hand durch Ausüben eines Drehmomentes auf das Drehteil wieder lösen läßt. Besonders bevorzugt ist es auch die Raststellen gerundet auszuführen, was die Handhabbarkeit eines erfindungsgemäßen Halters weiter verbessert. Bevorzugt ist es weiterhin, mehrere Vorsprünge vorzusehen, was den Vorteil hat, zum einen die Haltekraft des Formschlusses zu verbessern und zum anderen den durch Reibung zwangsläufig auftretenden Verschleiß auf mehrere Vorsprünge zu verteilen, was die Lebensdauer des Halters erhöht.

Eine weitere vorteilhafte Weiterbildung der Erfindung sieht vor, daß das Drehstück mit dem Klemmteil über mindestens eine Führungsstange verbunden ist. Diese Maßnahme hat den Vorteil, daß sich der Abstand zwischen Drehstück und Klemmteil bequem an Flaschen unterschiedlicher Größe anpassen läßt. Bevorzugt sind an gegenüberliegenden Seiten der Klemmflächen Führungsstangen vorgesehen, was vorteilhaft ein Verkanten des Klemmteils erschwert und somit die Handhabung vorteilhaft erleichtert.

Eine vorteilhafte Weiterbildung der Erfindung sieht hierzu vor, daß mindestens eine der Führungsstangen federbeaufschlagt ist. Diese Maßnahme hat den Vorteil, daß eine zwischen die Klemmflächen der Backe des Drehstückes und der Backe des Klemmteils eingebrachte Flasche durch die Federkraft der die Führungsstange beaufschlagenden Feder oder Federn zuverlässig eingeklemmt ist.

Eine weitere vorteilhafte Weiterbildung der Erfindung sieht vor, daß mindestens eine, vorzugsweise alle Klemmflächen konkav gerundet sind. Diese Maßnahme hat den Vorteil, daß die in der Regel konvex geformten Duschgel- oder Haarshampooflaschen einen möglichst guten Kontakt mit den Klemmflächen haben und so die Haltekraft erhöht ist.

Eine weitere vorteilhafte Weiterbildung der Erfindung sieht vor, daß die Backen verschränkbar ausgeführt sind. Diese Maßnahme hat den Vorteil, daß die Backen in ihrer verschränkten Stellung auch besonders kleine Flaschen, beispielsweise Probepackungen eines Duschgels, zuverlässig halten können, während die Bakken in ihrer unverschränkten Stellung selbst große Duschgel- oder Haarshampooflaschen zuverlässig halten können.

Eine weitere vorteilhafte Weiterbildung der Erfindung sieht vor, daß der Halter mit Mitteln zum Ausdrücken von Inhalt einer gehaltenen Flasche versehen ist. Zwar läßt sich grundsätzlich selbstverständlich auch von Hand auf eine gehaltene Flasche Druck ausüben, um deren Inhalt zu entnehmen, jedoch kann es insbesondere bei sehr kleinen Flaschen vorkommen, daß eine Flasche im wesentlichen vollständig von den Backen abgedeckt ist. Bei einer so kleinen Flasche ist es dann sehr mühsam mit bloßer Hand Druck auf die Flasche auszuüben, um Inhalt zu entnehmen. Die beschriebene Maßnahme erleichtert also die Bedienung eines erfindungsgemäßen Halters insbesondere für kleine Flaschen. Bevorzugt sind die Mittel zum Ausdrücken von Inhalt als Stift ausgeführt, welcher in einer im Klemmteil verlaufenden Ausnehmung vorgesehen ist. Vorteilhaft läßt sich durch Pressen auf einen solchen Stift Druck auf eine gehaltene Flasche ausüben, so daß Duschgel oder Haarshampoo entnehmbar ist. Vorteilhaft kann dies mit einer Hand geschehen, beispielsweise indem mit dem Daumen auf den Stift gepreßt wird und der auslaufende Inhalt mit der hohlen Hand aufgefangen wird. Bevorzugt weist dieser Stift ein verbreitertes Ende auf, welches auf eine gehaltene Flasche zum Ausdrücken von Inhalt preßbar ist. Ein verbreitertes Ende hat den Vorteil, daß Druck möglichst flächig auf die Flasche ausgeübt wird, so daß eine Beschädigung der Flasche verhindert ist.

Eine weitere vorteilhafte Weiterbildung der Erfindung sieht vor, daß das Drehstück den Grundkörper umschließt. Diese Maßnahme hat den Vorteil, daß ein Eindringen von Schmutz und Fremdkörpern zwischen Drehstück und Grundkörper erschwert ist. Insbesondere können zwischen Drehstück und Grundkörper eindringende Fremdkörper die Drehbarkeit des Drehstückes erschweren oder verhindern, so daß durch die vorstehend genannte Maßnahme die Lebensdauer des Halters erhöht ist.

Eine weitere vorteilhafte Weiterbildung der Erfindung sieht vor, daß das Drehstück mit dem Grundkörper über einen Bolzen verbunden ist. Diese Maßnahme hat den Vorteil, daß der erfindungsgemäße Halter einfach und kostengünstig fertigbar ist. Bevorzugt ist der Bolzen mit einer Feder versehen, welche das Drehstück gegen den Grundkörper zieht. Vorteilhaft wird so die Festlegbarkeit des Drehstückes in verschiedenen Drehwinkelstellungen zum Grundkörper verbessert.

Weitere Einzelheiten und Vorteile der Erfindung werden anhand der Ausführungsbeispiele unter Bezugnahme auf die beigefügten Figuren erläutert, wobei übereinstimmende Bezugszahlen gleiche oder einander entsprechende Teile bezeichnen. Es zeigen:
- Figur 1: ein Ausführungsbeispiel eines erfindungsgemäßen Halter in einer Schrägansicht,
- Figur 2: den in Figur 1 dargestellten Halter in einer Explosionsdarstellung,
- Figur 3: den in Figur 1 dargestellten Halter in einem Querschnitt, und
- Figur 4: ein weiteres Ausführungsbeispiel eines erfindungsgemäßen Halters in einer Schrägansicht,
- Figur 5: ein weiteres Ausführungsbeispiel in einer Explosionsdarstellung,
- Figur 6: einen Ausschnitt eines weiteren Ausführungsbeispieles eines erfindungsgemäßen Halters in einem Querschnitt,
- Figur 7: das in Figur 6 dargestellte Ausführungsbeispiel in einer Draufsicht, und
- Figur 8: ein weiteres Ausführungsbeispiel eines Drehteils eines erfindungsgemäßen Halters.

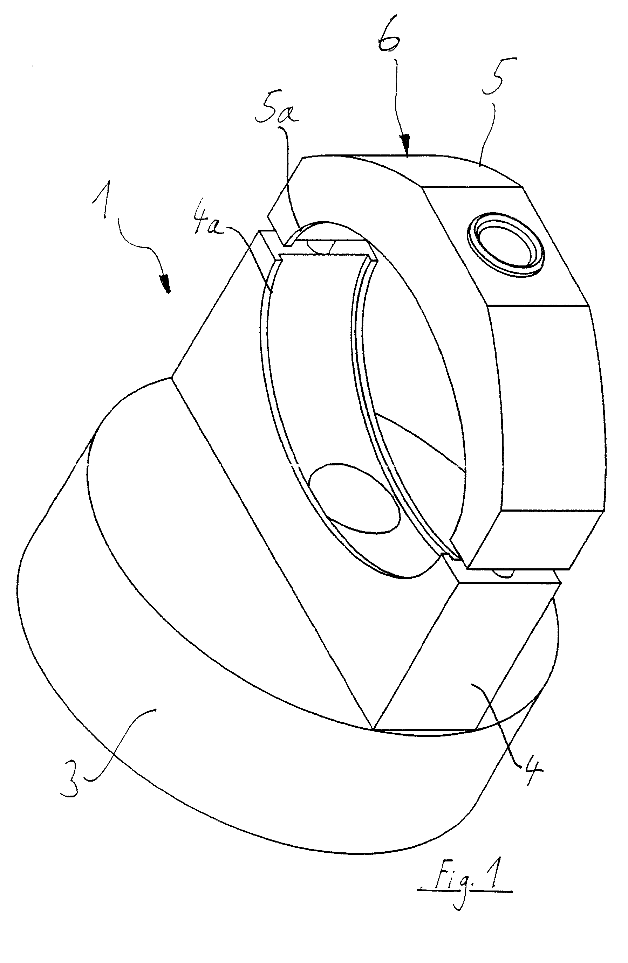

Der in Figur 1 gezeigte Halter 1 für Flaschen mit Duschgel, Haarshampoo oder einem ähnlichen fließfähigen Inhalt zur Körperpflege verfügt über zwei Backen 4, 5, zwischen deren Klemmflächen 4a, 5a eine Flasche einklemmbar ist. Die beiden Backen 4, 5 sind über Führungsstangen 8 verbunden, welche es erlauben den Abstand der beiden Backen 4, 5 an die verschiedenen Größen gebräuchlicher Duschgel- und Haarshampooflaschen anzupassen.

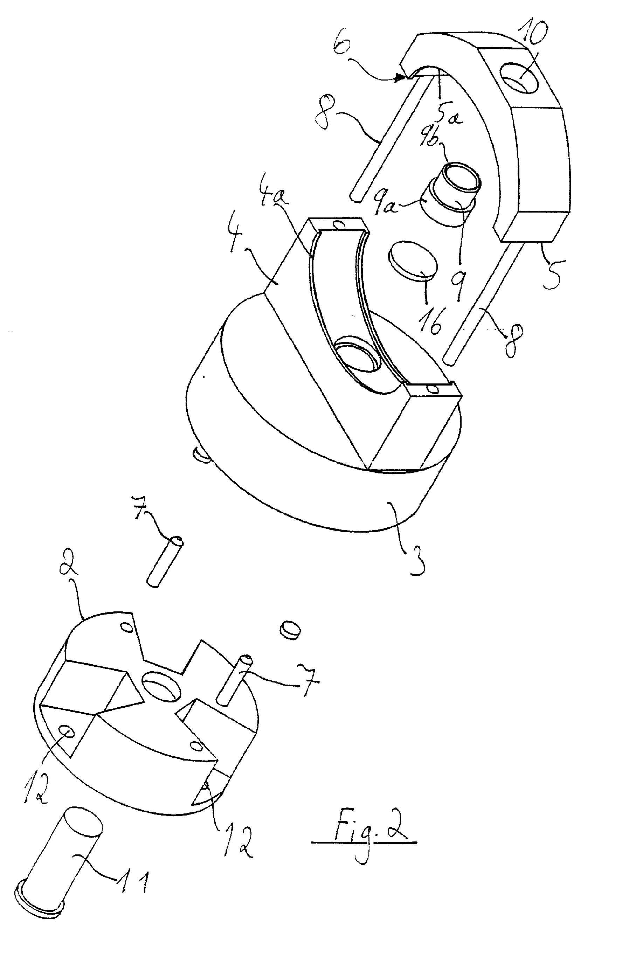

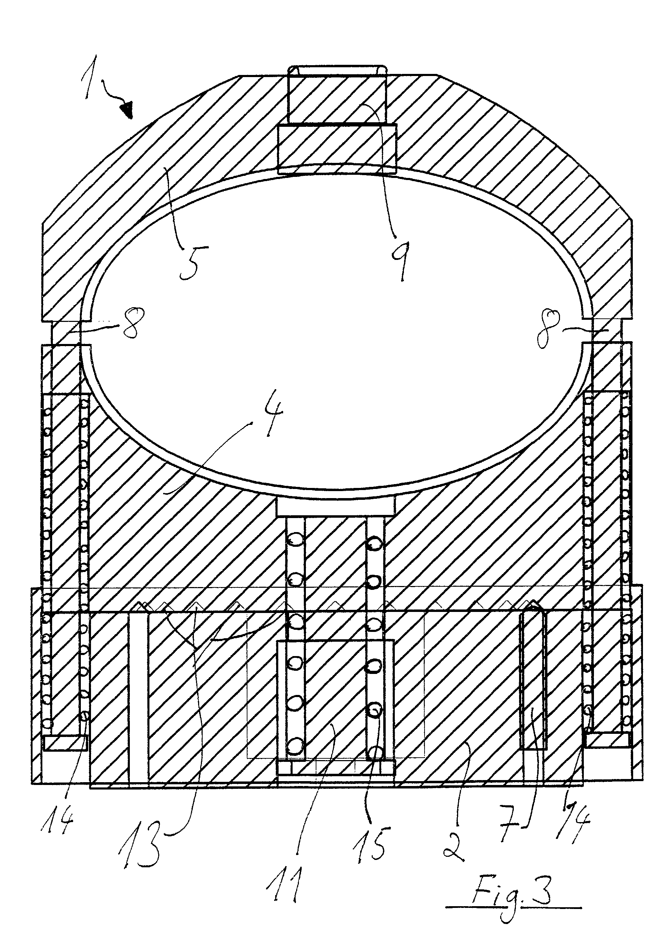

Figur 2 zeigt den in Figur 1 gezeigten Halter 1 in einer Explosionsdarstellung. Der Halter 1 weist einen Grundkörper 2 auf, welcher Durchbrüche 12 für Nägel oder Schrauben zum Befestigen an einer Wand aufweist, wobei der Halter 1 aber beispielsweise auch stoffschlüssig durch Kleben an einer Wand befestigbar ist. Der Grundkörper 2 wird von dem die erste Backe 4 tragenden Drehstück 3 umschlossen. Das Drehstück 3 ist in verschiedenen Drehwinkelstellungen zum Grundkörper 2 festlegbar. Das Festlegen des Drehstückes 2 in verschiedenen Drehwinkelstellungen erfolgt durch ein Verrasten der am Grundkörper 2 vorgesehenen Stifte 7 mit in Figur 3 gezeigten Ausnehmungen 13 an dem Drehstück 3. Drehstück 3 und Grundkörper 2 sind über den Bolzen 11 verbunden, welcher durch eine zentrische Ausnehmung in Grundkörper 2 und Drehstück 3 geführt ist.

Um auf eine gehaltene Flasche Druck zum Entnehmen von Inhalt ausüben zu können, ist in einer Ausnehmung der zweiten Backe 5 ein Stift 9 vorgesehen, welcher bei Druck auf sein in der Backe 5 gelagertes oder geringfügig aus ihm herausragendes Ende 9b mit seinem verbreiterten Ende 9a Druck auf eine gehaltene Flasche ausübt.

Figur 3 zeigt den vorstehend anhand der Figuren 1 und 2 beschriebenen Halter 1 im Querschnitt. In dieser Figur erkennt man die Raststellen 13, in welche die Stifte 7 zum Festlegen des Drehstückes 3 in einer bestimmten Drehwinkelstellung eingreifen. Die Führungsstangen 8, welche als integrale Teile des Klemmteils 6 ausgeführt sind, sind mit Federn 14 beaufschlagt, so daß die beiden Backen 4, 5 von den Federn 14 stets aufeinander zugezogen werden und eine zwischen ihnen gehaltene Flasche eingeklemmt ist. Der Bolzen 11, welcher Drehstück 3 und Grundkörper 2 verbindet, ist ebenfalls mit einer Feder 15 versehen, welche Grundkörper 3 und Drehstück 2 gegeneinander zieht. Ein Ende des Bolzens 11 ist mit einer Haltescheibe 16 versehen, welche einen Durchmesser aufweist, der größer ist, als der Durchmesser der in Grundkörper 2 und Drehstück 3 verlaufenden Ausnehmung, so daß nach Befestigen, beispielsweise durch Verkleben oder Verrasten, der Haltescheibe 16 an dem Bolzen 11 ein Lösen von Drehstück 3 und Grundkörper 2 voneinander verhindert ist.

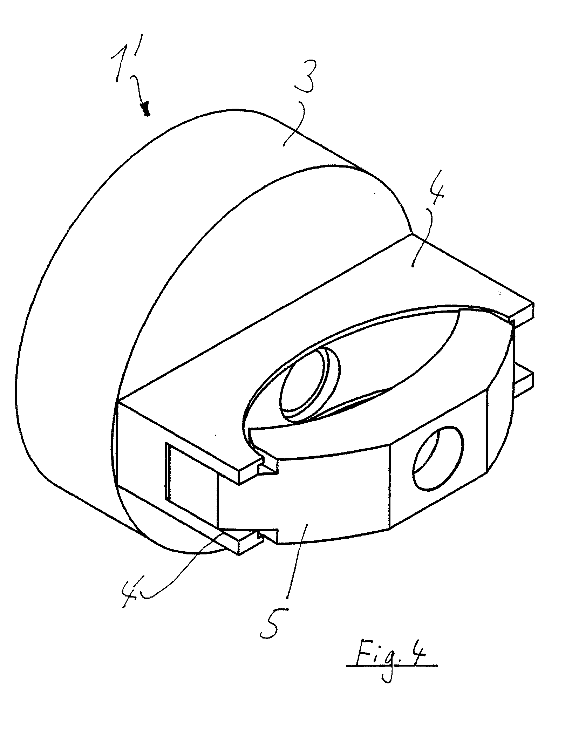

Figur 4 zeigt ein weiteres Ausführungsbeispiel eines Halters für Flaschen mit Duschgel, Haarshampoo oder einem ähnlichen fließfähigen Inhalt zur Körperpflege. Der in Figur 4 gezeigte Halter 1' unterscheidet sich von dem in Figur 1 gezeigten Halter 1 darin, daß die beiden Backen 4, 5 verschränkbar ausgeführt sind. Zu diesem Zweck verfügt die Backe 4 über Ausnehmungen 4', in welche die Backe 5 eintauchen kann. Vorteilhaft sind von einem solchen Halter 1' mit verschränkbaren Backen 4, 5 auch kleinere Flaschen, insbesondere Probepackungen, festlegbar.

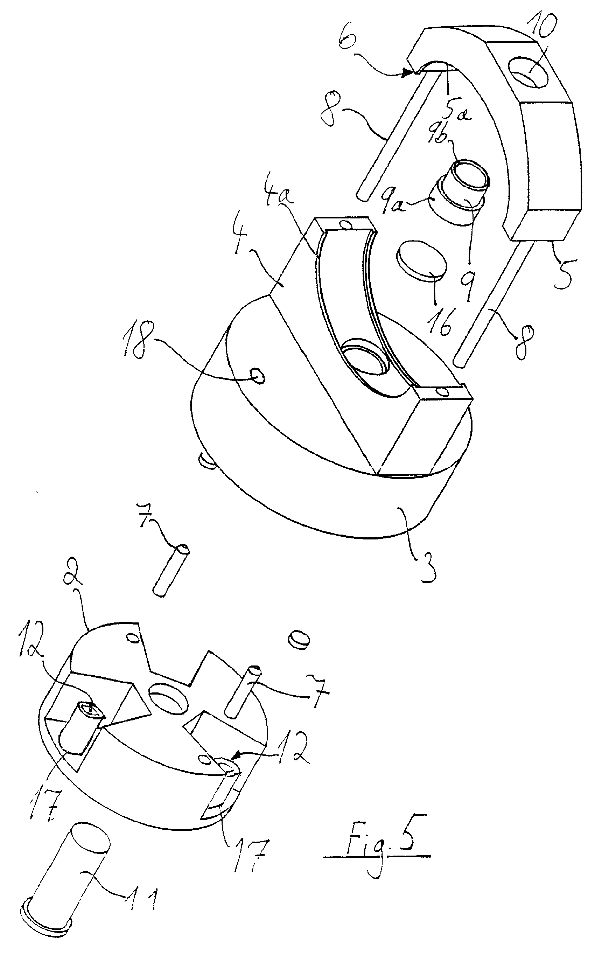

Das in Figur 5 gezeigte Ausführungsbeispiel unterscheidet sich von dem in Figur 2 gezeigten Ausführungsbeispiel im wesentlichen dadurch, daß am Grundkörper 2 Dome 17 vorgesehen sind, welche die Durchbrüche 12 zum Befestigen des Halters 1 umgeben und einen Innendurchmesser haben, der größer ist als der Durchmesser der Durchbrüche. Desweiteren ist das Drehstück 3 mit einer Ausnehmung 18 versehen, welche durch Drehen des Drehstückes 3 mit den von den Domen 17 umgebenen Durchbrüchen 12 zur Deckung gebracht werden kann. Zur Montage des in Figur 5 gezeigten Halters läßt sich dann mühelos eine Schraube durch die Ausnehmung 18 hindurch vom Dom 17 geführt zum Durchbruch 12 bringen und mit einem Schraubendreher beispielsweise in einen Dübel drehen, welcher in einem Bohrloch in einer Wand einer Duschkabine steckt. Zum Eindrehen der nächsten Schraube wird das Drehstück 3 weiter verdreht, so daß die Ausnehmung 18 mit dem nächsten Durchbruch 12 zur Deckung kommt. Die Ausnehmung 18 erleichtert vorteilhaft die Montage des Halters 1 an einer Wand, da der Halter 1 im ganzen montiert werden kann und dafür insbesondere nicht das Drehstück 3 zur Montage vom Grundkörper 2 getrennt werden muß. Die Dome 17 führen eine durch die Öffnung 18 eingeführte Schraube zum Durchbruch 12 und erlauben so insbesondere den Einsatz kostengünstigerer kurzer Schrauben.

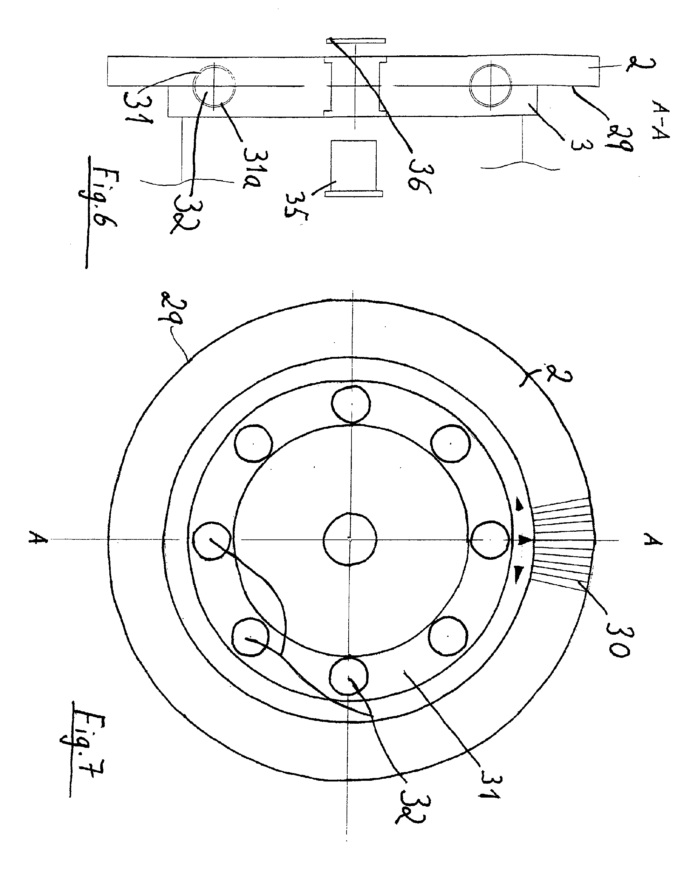

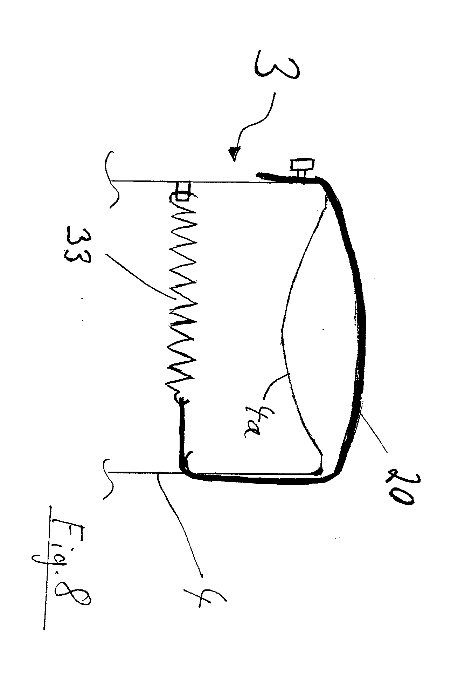

Figuren 6 und 7 zeigen ein weiteres Ausführungsbeispiel eines Grundkörpers 2, wobei in Figur 6 noch ein Drehstück 3 teilweise dargestellt ist. Im Unterschied zu den vorstehend beschriebenen Ausführungsbeispielen umschließt bei dem in Figuren 6 und 7 gezeigten Ausführungsbeispiel das Drehstück 3 nicht die Umfangsflächen des Grundkörpers 2. Statt dessen ist das Drehstück 3 auf den Grundkörper 2 einseitig aufgesetzt, so daß ein Randbereich 29 des Grundkörpers 2 sichtbar bleibt, welcher sich beispielsweise zum Anbringen einer Skala 30 nutzen läßt, welche das Verdrehen des Drehstückes um definierte Winkelschritte erleichtert, wenn, wie es in diesem Ausführungsbeispiel der Fall ist, keine Raststellungen vorgegeben sind, sondern eine stufenlose Verstellung möglich ist. Im Randbereich 29 lassen sich Löcher zum Befestigen des Halters an einer Wand vorsehen. Das hat den Vorteil, daß das Drehstück nicht abgenommen werden muß, wenn man den Halter an einer Wand montieren will. In dem Grundkörper 2 und dem Drehstück 3 sind bei dem in Figuren 6 und 7 gezeigten Ausführungsbeispiel deckungsgleiche Kugelrinnen 31 und 31 a vorgesehen, welche sich zu einem Ringkanal ergänzen in welchem Kugeln 32 laufen die in einem nicht dargestellten Kugelkäfig gegangen sind. Durch eine solche Kugellagerung wird eine bessere Verdrehbarkeit des Drehstückes 3 gegenüber dem Grundkörper 2 erreicht.

Der Grundkörper 2 und das Drehstück 3 sind durch eine Schraube 35 und eine Mutter 36, welche zentral angeordnet sind, miteinander verbunden und können durch Anziehen der Schraube 35 miteinander gegen die Kugeln 32 des Kugellagers verspannt werden, um das Drehstück 3 in beliebigen Drehwinkelstellungen kraftschlüssig halten zu können. Dazu kann zwischen dem Kopf der Schraube 35 und dem Drehstück 3 eine nicht dargestellte Feder vorhanden sein.

Figur 8 zeigt ausschnittsweise ein weiteres Ausführungsbeispiel eines Drehstükkes 3 eines Halters 1. Bei diesem Ausführungsbeispiel dient ein Riemen 20, welcher von einer Feder 33 gespannt wird, zum klemmschlüssigen Befestigen einer Flasche mit Duschgel, Haarshampoo oder einem ähnlichen fließfähigen Inhalt zur Körperpflege. Das Drehstück 3 verfügt über eine erste Backe 4, welche eine erste Klemmfläche 4a aufweist, die mit dem Band 20 zusammenwirkt. Vorteilhaft kann auf diese Art und Weise eine zweite Backe, wie sie bei den vorhergehenden Ausführungsbeispielen vorgesehen ist, entfallen.

## Patentansprüche

1. Halter für Flaschen mit Duschgel, Haarshampoo oder einem ähnlichen fließfähigen Inhalt zur Körperpflege, mit einem Grundkörper (2) zum Befestigen an einer Wand, an welchem drehbar ein Drehstück (3) mit Mitteln zum Einklemmen (4, 5, 6, 20) einer Flasche vorgesehen ist, wobei das Drehstück (3) in verschiedenen Drehwinkelstellungen zum Grundkörper (2) festlegbar ist.

2. Halter nach Anspruch 1, **dadurch gekennzeichnet, daß** das Drehstück (3) eine erste Backe (4) mit einer ersten Klemmfläche (4a) aufweist, welche mit einer zweiten Klemmfläche (5a) einer zweiten Backe (5) eines Klemmteiles (6) zusammenwirkt.

3. Halter nach Anspruch 1 oder 2, **dadurch gekennzeichnet, daß** zwischen dem Drehstück (3) und dem Grundkörper (2) ein Kugellager (31, 32) vorgesehen ist.

4. Halter nach einem der vorstehenden Ansprüche, **dadurch gekennzeichnet, daß** das Drehstück (3) reversibel formschlüssig in verschiedenen Drehwinkelstellungen mit dem Grundkörper (2) verrastbar ist.

5. Halter nach Anspruch 4, **dadurch gekennzeichnet, daß** der Formschluß zwischen Drehstück (3) und Grundkörper (2) durch Eingriff eines Vorsprunges (7) in dafür vorgesehene Raststellen erfolgt.

6. Halter nach Anspruch 4 oder 5, **dadurch gekennzeichnet, daß** an einer dem Grundkörper (2) zugewandten Oberfläche des Drehstückes (3) Raststellen vorgesehen sind, welche mit einem am Grundkörper (2) vorgesehenen Vorsprung (7) verrastbar sind.

7. Halter nach Anspruch 5 oder 6, **dadurch gekennzeichnet, daß** der Vorsprung (7) abgerundet ausgeführt ist.

8. Halter nach einem der Ansprüche 5 bis 7, **dadurch gekennzeichnet, daß** mehrere Vorsprünge (7) vorgesehen sind.

9. Halter nach einem der vorstehenden Ansprüche, **dadurch gekennzeichnet, daß** das Drehstück (3) mittels einer Ratsche in verschiedenen Drehwinkelstellungen festlegbar ist.

10. Halter nach einem der vorstehenden Ansprüche, **dadurch gekennzeichnet, daß** das Drehstück (3) mit dem Klemmteil (6) über mindestens eine Führungsstange (8) verbunden ist.

11. Halter nach einem der vorstehenden Ansprüche, **dadurch gekennzeichnet, daß** an gegenüberliegenden Seiten der Klemmflächen (4a, 5a) Führungsstangen (8) vorgesehen sind.

12. Halter nach Anspruch 10 oder 11, **dadurch gekennzeichnet, daß** mindestens eine der Führungsstangen (8) federbeaufschlagt ist.

13. Halter nach einem der vorstehenden Ansprüche, **dadurch gekennzeichnet, daß** mindestens eine, vorzugsweise alle, Klemmflächen (4a, 5a) konkav gerundet sind.

14. Halter nach einem der vorstehenden Ansprüche, **dadurch gekennzeichnet, daß** die Backen (4, 5) verschränkbar ausgeführt sind.

15. Halter nach einem der vorstehenden Ansprüche, **dadurch gekennzeichnet, daß** der Halter (1, 1') mit Mitteln zum Ausdrücken von Inhalt einer gehaltenen Flasche versehen ist.

16. Halter nach Anspruch 15, **dadurch gekennzeichnet, daß** die Mittel zum Ausdrücken von Inhalt als Stift (9) ausgeführt sind, welcher in einer im Klemmteil (6) verlaufenden Ausnehmung (10) vorgesehen ist.

17. Halter nach Anspruch 16, **dadurch gekennzeichnet, daß** der Stift (10) ein verbreitertes Ende (9a) aufweist, welches auf eine gehaltene Flasche zum Ausdrücken von Inhalt preßbar ist.

18. Halter nach einem der vorstehenden Ansprüche, **dadurch gekennzeichnet, daß** das Drehstück (3) den Grundkörper (2) umschließt.

19. Halter nach einem der vorstehenden Ansprüche, **dadurch gekennzeichnet, daß** das Drehstück (3) mit dem Grundkörper (2) über einen Bolzen (11) verbunden ist.

20. Halter nach Anspruch 19, **dadurch gekennzeichnet, daß** der Bolzen (11) mit einer Feder (15) versehen ist, welche das Drehstück (3) gegen den Grundkörper (2) zieht.

21. Halter nach einem der vorstehenden Ansprüche, **dadurch gekennzeichnet, daß** der Grundkörper (2) Durchbrüche (12) zum Befestigen des Halters aufweist, welche von Domen (17) umgeben sind, die einen Innendurchmesser haben, der größer ist als der Durchmesser der Durchbrüche (12).
